# EUROPEAN PATENT SPECIFICATION

(11) **EP 3 428 348 B1**
(45) Date of publication and mention of the grant of the patent: **28.10.2020**
(21) Application number: 16893587.2
(22) Date of filing: 31.10.2016
(51) Int. Cl.: E02F 9/20, B60R 16/02, G06F 11/00, E02F 9/22, E02F 9/26, G06F 8/65, G06F 11/07, G06F 11/30

(54) **PROGRAM REWRITING DEVICE FOR CONSTRUCTION MACHINE**
PROGRAMMNEUSCHREIBUNGSVORRICHTUNG FÜR BAUMASCHINE
DISPOSITIF DE RÉÉCRITURE DE PROGRAMME POUR ENGIN DE CHANTIER

(30) Priority: 07.03.2016 JP 2016043224
(43) Date of publication of application: 16.01.2019
(73) Proprietor: Hitachi Construction Machinery Co., Ltd., Taito-ku Tokyo 110-0015 (JP)
(72) Inventor: AIZAWA, Taiki, Tsuchiura-shi Ibaraki 300-0013 (JP); MORITA ,Yuichiro, Tsuchiura-shi Ibaraki 300-0013 (JP); SHIBATA, Kouichi, Tsuchiura-shi Ibaraki 300-0013 (JP)
(74) Representative: MERH-IP Matias Erny Reichl Hoffmann Patentanwälte PartG mbB
(86) International application number: PCT/JP2016/082334
(87) International publication number: WO 2017/154263

(56) References cited:
- EP-A2- 1 434 129
- WO-A1-01/73218
- JP-A- H0 620 127
- JP-A- 2004 199 491
- JP-A- 2004 199 493
- JP-A- 2015 101 229
- US-A1- 2004 002 793
- US-A1- 2016 002 892
- US-A1- 2016 010 313

## Description

### TECHNICAL FIELD

The present invention relates to a program rewriting device for a construction machine.

### BACKGROUND ART

A construction machine is provided with a plurality of controllers that control a vehicle body, and a program stored in each controller may be required to be rewritten after shipment. In this case, a service person visits the installation place of the construction machine, and can perform a program rewriting operation and an operation for replacement with the controller whose program has been rewritten. However, this is a problem in terms of time and cost.

Accordingly, it is preferable to update the program without the service person visiting the installation place of the construction machine by transmitting a program from a server through satellite communication to the construction machine. However, required are a system that monitors whether or not the vehicle body is in a state where the program can be rewritten and a mechanism corresponding to an unexpected operation during rewriting. For example, Patent Literature 1 discloses a configuration that previously checks the state of a vehicle in a program rewriting process to determine whether or not a program can be rewritten.

By the way, requests for the immediateness of rewriting execution are not always uniform in program rewriting, and there are a request in which a program is required to be rewritten immediately where possible, that is, in which the degree of urgency is high, and a request in which a program is not required to be rewritten immediately where possible, that is, in which the degree of urgency is low.

### CITATION LIST

### PATENT LITERATURE

PATENT LITERATURE 1: JP-A No. 2004-199493

### SUMMARY OF INVENTION

### TECHNICAL PROBLEM

In the invention described in Patent Literature 1, the degree of urgency of a rewriting program is not considered, and program rewritable conditions are uniform without depending on the degree of urgency of the program.

### SOLUTION TO PROBLEM

A program rewriting device for a construction machine of a first aspect of the present invention is provided with a mode determination section that determines whether the operation mode of the construction machine is a maintenance mode in which a program can be rewritten and the operation of an actuator is prevented, a preparation mode in which the rewriting of the program and the operation of the actuator are prevented, or a work mode in which the rewriting of the program is prevented and the operation of the actuator is permitted, an urgency degree determination section that determines the degree of urgency for rewriting of a program, and a rewriting execution section that, when the mode determination section has determined that the operation mode is the preparation mode and the urgency degree determination section has determined that the degree of urgency is high, rewrites the program by switching the operation mode to the maintenance mode.

### ADVANTAGEOUS EFFECTS OF INVENTION

According to the present invention, in the construction machine in which program updating is not permitted except in the maintenance mode, when an update program in which the degree of urgency is high is delivered while the preparation mode is set, the program can be rewritten by switching the operation mode from the preparation mode to the maintenance mode. That is, the rewriting by using the program in which the degree of urgency is high can be executed without delay.

### BRIEF DESCRIPTION OF DRAWINGS

[Fig. 1] Fig. 1 is a diagram illustrating the configuration of a program rewriting system 100.
[Fig. 2] Fig. 2 is a functional block diagram of a control controller 3 and an information controller 4.
[Fig. 3] Fig. 3 is a diagram of the changes of operation modes.
[Fig. 4] Fig. 4 is a diagram illustrating the structure of data that is transmitted to a hydraulic excavator 1.
[Fig. 5] Fig. 5 is a diagram illustrating an example of program updating notification.
[Fig. 6] Fig. 6 is a flowchart illustrating the operation of a server 81.
[Fig. 7] Fig. 7 is a flowchart illustrating the operation of the control controller 3.
[Fig. 8] Fig. 8 is a flowchart illustrating the operation of a maintenance processing section 46.
[Fig. 9] Fig. 9 is a flowchart of a subroutine illustrating the detail of step S320 in Fig. 8.
[Fig. 10] Fig. 10 is a functional block diagram of a control controller 3A and an information controller 4A according to modification 1.
[Fig. 11] Fig. 11 is a flowchart illustrating the operation of the control controller 3 according to modification 2.
[Fig. 12] Fig. 12 is a diagram illustrating the structure of data that is transmitted to the hydraulic excavator 1 according to a second embodiment.
[Fig. 13] Fig. 13 is a flowchart illustrating the operation of the maintenance processing section 46 according to the second embodiment.

### DESCRIPTION OF EMBODIMENTS

### (First embodiment)

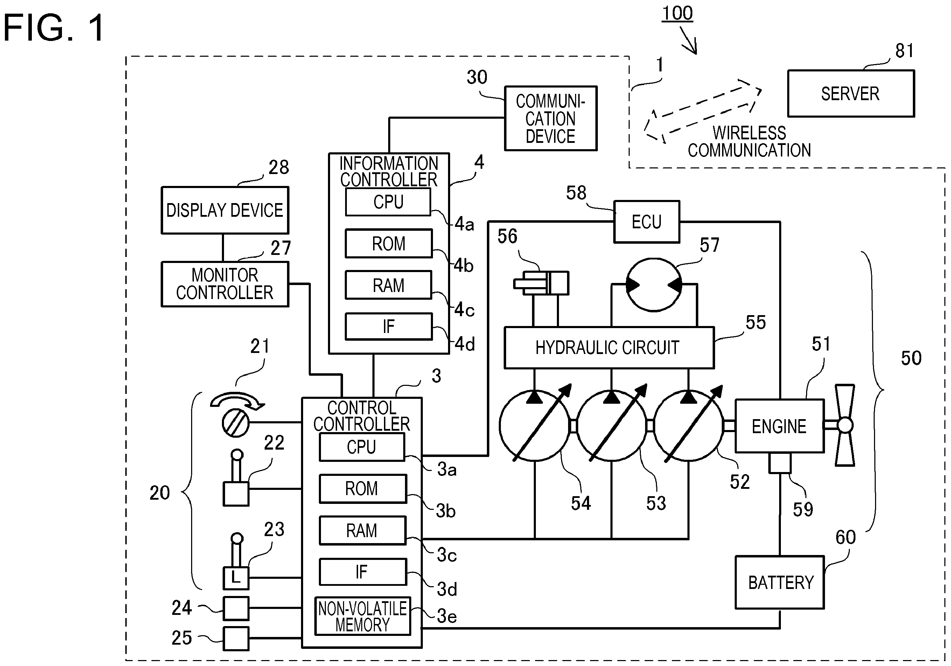

Hereinafter, a first embodiment of a program rewriting system 100 including a program rewriting device according to the present invention will be described with reference to Figs. 1 to 9.

### (Configuration)

Fig. 1 is a diagram illustrating the configuration of the program rewriting system 100 for a construction machine having a hydraulic excavator 1 and a server 81. The hydraulic excavator 1 includes an information controller 4 that is the program rewriting device for the construction machine according to the present invention.

The hydraulic excavator 1 is provided with an input device 20 to which an operation input by an operator is inputted, a control controller 3 that operates the hydraulic excavator 1 based on the input to the input device 20, the information controller 4 that performs information processing including program rewriting, a communication device 30 that communicates with the server 81, a display device 28 that displays information to the operator, a monitor controller 27 that controls the display device 28, an operation section 50 including an engine 51 and a hydraulic circuit 55, and a battery 60. It is to be noted that herein, the control controller 3 is an on-board controller.

The input device 20 is provided with a key switch 21 that is operated to be switched to an off position, an accessary position, and a start position, an operating lever 22 that outputs an instruction for operating an actuator according to the operation of the lever, an operating lever lock 23 that outputs a gate lock signal that prevents the operation of the actuator even when the operating lever 22 is operated, sensors 24 that output sensor signals by detecting the pressures of the respective portions of the hydraulic circuit 55 and the state amounts of the respective portions of the hydraulic excavator, and a maintenance mode setting switch 25 as a setting operation section that is operated when a maintenance mode is set. It is to be noted that a device, such as an engine control dial, that sets and inputs the target value of the rotational speed of the engine is also connected.

The control controller 3 is provided with a CPU 3a executing a program described later, a ROM 3b in which the program is stored, a RAM 3c that is used for executing the program, an interface 3d, and a non-volatile memory 3e. The ROM 3b is an EEPROM that is electrically rewritable, and as described later, the program that is stored in the ROM 3b is rewritten by the information controller 4. An NMI flag described later is stored in the RAM 3c. An unupdate flag described later and update program information are stored in the non-volatile memory 3e.

The information controller 4 is provided with a CPU 4a executing a program described later, a ROM 4b in which the program is stored, a RAM 4c that is used for executing the program, and an interface 4d.

The operation section 50 is provided with the engine 51, hydraulic pumps 52 to 54 to which power is given from the engine 51, the hydraulic circuit 55, a hydraulic cylinder 56, a hydraulic motor 57, an ECU 58 that controls the engine 51, and a cell motor 59 that starts the engine 51. A pressure oil that is discharged from each pump is sent to the hydraulic circuit 55 including a control valve, is controlled in flow rate and direction, and is supplied to the hydraulic cylinder 56 and the hydraulic motor 57. The discharge displacement of each pump and the control valve of the hydraulic circuit 55 are controlled by the control controller 3. The cell motor 59 starts the engine 51 by using the battery 60 as a power source.

The battery 60 supplies electric power to the control controller 3, the information controller 4, the communication device 30, and the cell motor 59. Thus, these devices can be operated even in a state where the engine 51 stops.

The display device 28 is, for example, a liquid crystal display, and displays information to the operator based on an operation instruction from the monitor controller 27. The display device 28 displays, for example, the rotational speed of the engine, the remaining amount of a fuel, and operation time, and also displays program updating notification by a process described later.

### (Functional block)

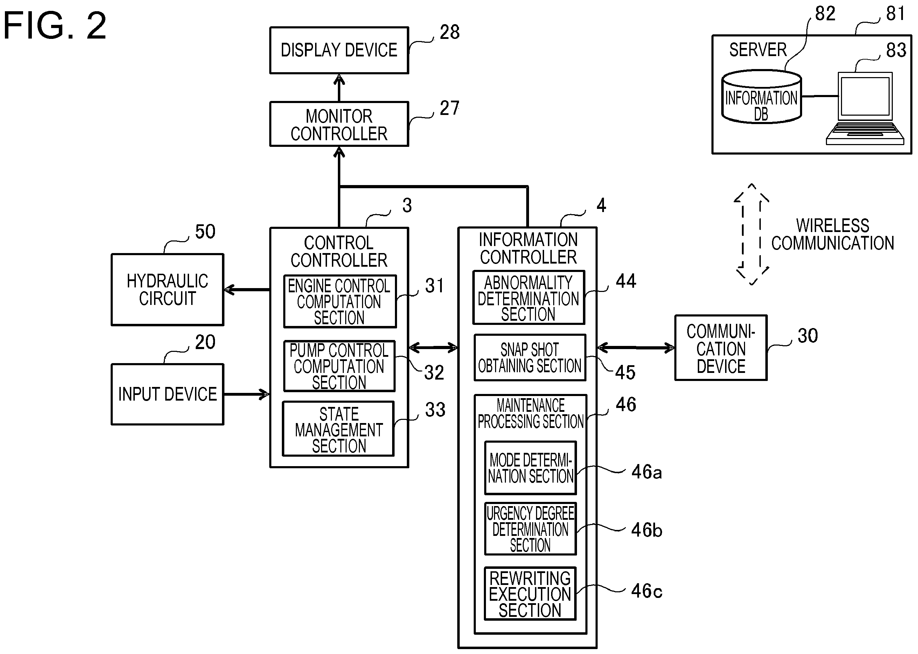

Fig. 2 is a diagram illustrating, as functional blocks, functions executed by the control controller 3 and the information controller 4.

An engine control computation section 31, a pump control computation section 32, and a state management section 33 represent, as the functional blocks, the functions that the program executed by the CPU 3a of the control controller 3 has.

The engine control computation section 31 calculates the target rotational speed of the engine 51 based on an operation input by the operator to the engine control dial, not illustrated, and outputs the target rotational speed to the ECU 58.

The pump control computation section 32 calculates the target value of the discharge displacement of each of the hydraulic pumps 52 to 54 based on an operation input by the operator to the operating lever 22 and each of various sensor signals from the sensors 24, and outputs a signal so that the discharge displacement of each of the hydraulic pumps 52 to 54 is the target value.

The state management section 33 changes the operation mode of the hydraulic excavator 1 based on an operation input by the operator to the operating lever 22, various sensor signals from the sensors 24, and an instruction from the information controller 4. The operation mode and its change will be described later in detail.

An abnormality determination section 44, a snap shot obtaining section 45, and a maintenance processing section 46 represent, as the functional blocks, the functions that the program executed by the CPU 4a of the information controller 4 has.

The abnormality determination section 44 constantly monitors the output value of each of various sensors with which the hydraulic excavator 1 is provided, determines, when the output value exceeds a predetermined range, that an abnormality has occurred, and notifies the occurrence of the abnormality to the server 81. For example, when determining that the voltage of the battery 60 has lowered to less than a predetermined value, the abnormality determination section 44 determines that an abnormality has occurred. Herein, the abnormality determination section 44 of the information controller 4 reads the NMI flag set by the control controller 3 to the non-volatile memory 3e according to the voltage of the battery, and determines whether or not program updating is enabled.

When the abnormality determination section 44 detects the operation abnormality of the hydraulic excavator 1, the snap shot obtaining section 45 transmits, of sensor signals from the sensors 24, the sensor signal that has determined an abnormality, to the server 81.

The maintenance processing section 46 rewrites a program of the control controller 3, and transmits the operation information of the hydraulic excavator 1 to the server 81. The maintenance processing section 46 is provided with a mode determination section 46a that determines the setting state of the operation mode managed by the state management section 33 of the control controller 3, an urgency degree determination section 46b that determines the degree of urgency for rewriting of an update program, and a rewriting execution section 46c that outputs an instruction for rewriting the program stored in the ROM 3b of the control controller 3 by using the update program when the program rewriting conditions are established. The rewriting of the program will be described later in detail.

It is to be noted that the operation information that is transmitted to the server 81 is used when the operation state of the hydraulic excavator during operation at a remote place is monitored by a managing sensor.

The server 81 is provided with an information database 82 and an information terminal 83. The update program described later and the operation information transmitted from the hydraulic excavator 1 are stored in the information database 82. The above-described sensor signal is part of the operation information. The update program is appropriately added to the information database 82 by a sever manager. The information terminal 83 is a computer that is provided with a CPU, a ROM, and a RAM, and transmits the newly added update program by executing a program described later to the information controller 4. The information controller 4 temporarily stores the update program received by the communication device 30 in the RAM 4c. The detail will be described later.

### (Operation mode)

The operation mode of the hydraulic excavator 1 that is managed by the state management section 33 of the control controller 3 will be described.

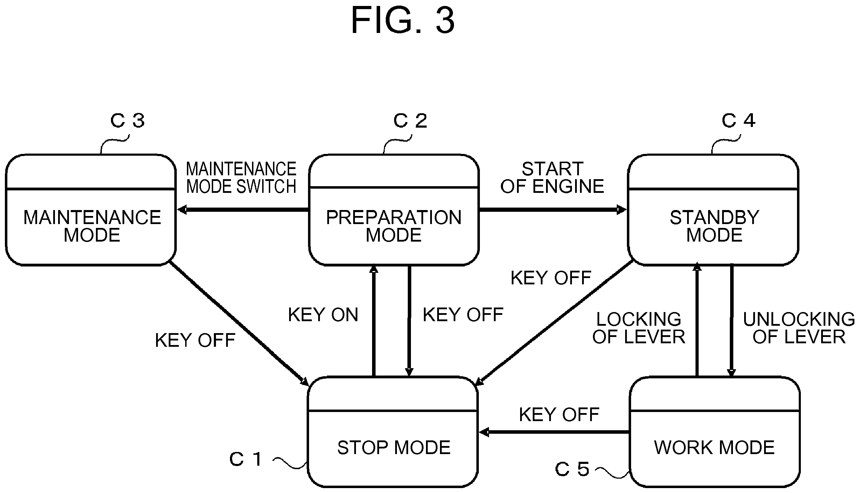

The state management section 33 switches the setting of the operation mode of the hydraulic excavator 1 based on a signal and the like from the input device 20. Fig. 3 is a diagram illustrating the changes of five operation modes that the hydraulic excavator 1 can take. The hydraulic excavator 1 takes any one of the states of stop mode C1, preparation mode C2, maintenance mode C3, standby mode C4, and work mode C5.

Stop mode C1 is a state where the operation of the hydraulic excavator 1 stops. The state management section 33 performs changing to stop mode C1 from any of the remaining states when the key switch 21 is set to the off position.

Preparation mode C2 is a state where the key switch 21 is switched to the accessary position, that is, a state where the engine 51 is not operated and the auxiliary devices and the like are operated by electric power supplied from the battery 60. That is, in preparation mode C2, the control controller 3, the information controller 4, the communication device 30, the monitor controller 27, and the display device 28 can be operated, but the operation section 50 is not operated. When the key switch 21 is switched to the accessary position in stop mode C1, the state management section 33 changes stop mode C1 to preparation mode C2.

Maintenance mode C3 is a mode for performing the maintenance operation of the hydraulic excavator 1. A program stored in the ROM 3b of the control controller 3 can be rewritten only in maintenance mode C3. When the maintenance mode setting switch 25 is pressed in preparation mode C2, the state management section 33 changes preparation mode C2 to maintenance mode C3.

Standby mode C4 is a state where the engine 51 is operated, but an operation by the operating lever 22 is not accepted. When the engine 51 is started in preparation mode C2, the state management section 33 changes preparation mode C2 to standby mode C4, and when the operating lever lock 23 is set to a locking state in work mode C5, the state management section 33 changes work mode C5 to standby mode C4. The engine 51 is started in such a manner that the key switch 21 is operated to the start position and that the control controller 3 operates the cell motor 59.

Work mode C5 is a state where the hydraulic excavator 1 is operated based on the operation of the operating lever 22 by the operator. When the operating lever lock 23 is set to an unlocking state in standby mode C4, the state management section 33 changes standby mode C4 to work mode C5.

### (The operation of the server)

The operation of the server 81 will be described.

The information terminal 83 of the server 81 reads the information database 82 at each fixed time, and confirms the presence or absence of a new update program. When detecting a new update program, the information terminal 83 transmits the update program to the hydraulic excavator 1. The information controller 4 of the hydraulic excavator 1 temporarily stores the update program received by the communication device 30 in the RAM 4c. The update program is a program to which function improvement is added, and the information controller 4 outputs an execution instruction for rewriting a program stored in the ROM 3b of the control controller 3 by using the update program to the control controller 3.

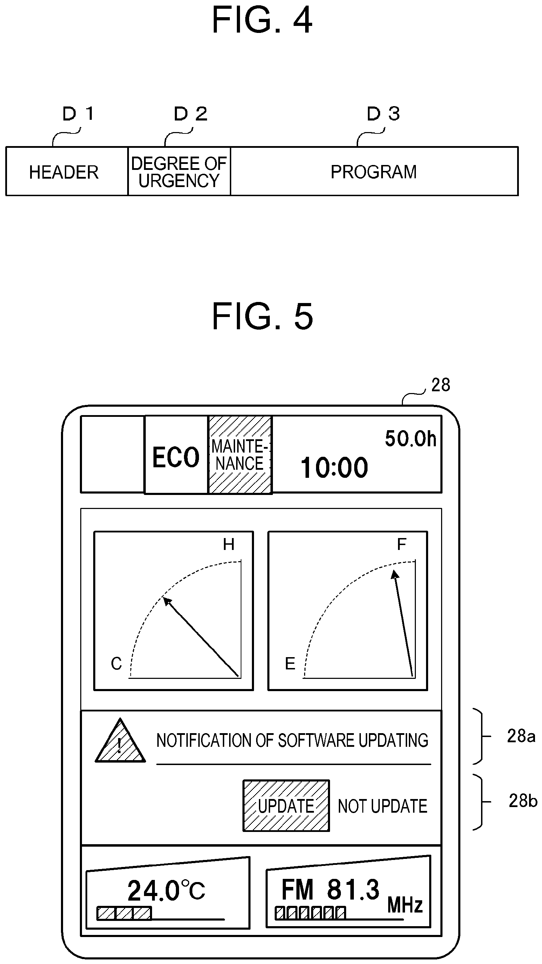

Fig. 4 is a diagram illustrating the structure of data including an update program transmitted to the hydraulic excavator 1 (hereinafter, update program information) . The data that is transmitted to the hydraulic excavator 1 by the information terminal 83 includes header D1, urgency degree information D2, and update program D3. Header D1 is an identifier representing that the data is update program information. Urgency degree information D2 represents the degree of urgency in which the previous program is rewritten to the update program. For example, "1" represents urgency, and "0" represents non-urgency. Urgency degree information D2 is stored in the information database 82 together with the update program. Update program D3 is the previously described update program stored in the information database 82.

### (The operation of the control controller)

The control controller 3 monitors the voltage of the battery 60 at each fixed time, sets the NMI flag to ON when the voltage of the battery 60 is less than a predetermined voltage, and sets the NMI flag to OFF when the voltage of the battery 60 is the predetermined voltage or more. As described later, the information controller 4 uses the NMI flag when determining whether or not program updating is enabled.

At the time of receiving a program updating instruction and an update program from the information controller 4 when the operation mode is maintenance mode C3, the control controller 3 updates a program stored in the ROM 3b by using the update program.

However, even when receiving the program updating instruction, when the operation mode other than maintenance mode C3, for example, when preparation mode C2 or work mode C5, the control controller 3 does not update the program. The received update program is stored in the non-volatile memory 3e.

### (The operation of the information controller)

The information controller 4 grasps the current operation mode that is managed by the state management section 33 of the control controller 3. When the communication device 30 receives update program information from the server 81, the information controller 4 temporarily stores an update program in the RAM 4c. Then, the information controller 4 determines whether or not urgency degree information D2 included in the update program information is information representing urgency, and performs different processes according to the operation mode of the hydraulic excavator 1, as shown in cases 1 to 3 below. Hereinafter, whether or not urgency degree information D2 is information representing urgency is expressed as "the degree of urgency is high or low".

### <Case 1>

When the operation mode at the time of receiving an update program is maintenance mode C3 and the degree of urgency of the update program is high, the information controller 4 immediately transmits an updating instruction and the update program to the control controller 3 to start updating a program. When the operation mode at the time of receiving an update program is preparation mode C2 and the degree of urgency of the update program is high, the information controller 4 transmits an instruction for changing the operation mode to maintenance mode C3, an updating instruction, and the update program to the control controller 3. The control controller 3 changes the operation mode to maintenance mode C3, and rewrites a program of the ROM 3b by using the update program.

### <Case 2>

When the operation mode at the time of receiving an update program is maintenance mode C3 or preparation mode C2 and the degree of urgency of the received update program is low, the information controller 4 notifies program updating to the operator to inquire whether or not updating is required.

Fig. 5 is a diagram illustrating an example of program updating notification. The display device 28 displays the presence of program updating together with a triangular mark that represents the drawing of attention (the reference sign 28a), and a button (28b) for selecting whether or not updating is required to be applied. When the operator selects the execution of updating, that is, "Update" in the example in Fig. 5, the information controller 4 allows the control controller 3 to start program updating.

However, when the operation mode at the time of receiving an update program in which the degree of urgency is low is preparation mode C2, the information controller 4 does not perform operation mode change for the case where the degree of urgency is high. When the operator operates the maintenance mode setting switch 25 to perform changing to maintenance mode C3 and inputs the intention indication of program updating, the control controller 3 executes the program updating. In contrast, the operator who has performed switching to the maintenance mode selects that updating is not performed, that is, "Not update" in the example in Fig. 5, the information controller 4 inquires about a period in which the next program updating notification is performed, and performs the program updating notification in the period again.

### <Case 3>

When the operation mode at the time of receiving an update program is standby mode C4 or work mode C5, the information controller 4 does not perform program updating notification regardless of the degree of urgency of the update program, and performs the program updating notification at the next start-up. For this notification, the unupdate flag stored in the non-volatile memory 3e is used.

That is, when the operation mode at the time of receiving an update program is standby mode C4 or work mode C5, the information controller 4 sets the unupdate flag stored in the non-volatile memory 3e of the control controller 3 to ON, and stores received update program information in the non-volatile memory 3e of the control controller 3. Then, when identifying that the unupdate flag is ON at the time of changing to preparation mode C2 next time, the information controller 4 determines that the received update program information has been stored in the non-volatile memory 3e. Then, the information controller 4 reads the update program information from the non-volatile memory 3e, and performs the same process as the case of receiving the update program information from the communication device 30. That is, the processes that have been described in cases 1 and 2 are executed.

It is to be noted that since the update program information has been already stored in the non-volatile memory 3e of the control controller 3, it is not necessary for the information controller 4 to deliver the update program information again.

It is to be noted that, to prevent a failure of program updating due to the lowering of the source voltage, the information controller 4 confirms the NMI flag before updating is started, and does not output a program updating instruction when the NMI flag is ON, that is, when the source voltage lowers. Then, the information controller 4 notifies the lowering of the source voltage to the operator, sets the unupdate flag to ON, and stores update program information in the non-volatile memory 3e of the control controller 3.

That is, at the time of receiving an update program from the server 81, the information controller 4 reads the operation mode and the flag that represents the lowering of the source voltage, and determines the presence or absence of the establishment of the program rewriting conditions.

### (A flowchart illustrating the operation of the server)

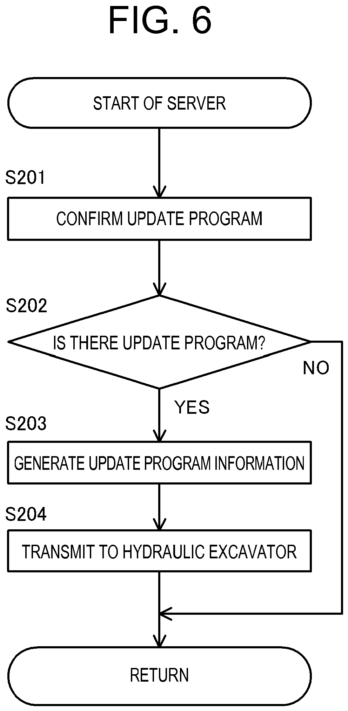

The operation of the information terminal 83 that has been described above is performed by the program described in Fig. 6.

Fig. 6 is a flowchart illustrating the operation of the program that is executed by the information terminal 83 of the server 81 at each fixed time. The CPU of the information terminal 83 mainly executes each step described below.

In step S201, the information database 82 is read, the presence or absence of a new update program is confirmed, and the process proceeds to step S202.

In step S202, the presence or absence of a new update program is determined. When it is determined that there is a new update program, the process proceeds to step S203. When it is determined that there is not a new update program, the program in Fig. 6 is ended.

In step S203, the new update program and the urgency degree information of the program are read from the information database 82, and update program information that is information to be transmitted is generated. Next, the process proceeds to step S204.

In step S204, the update program information that has been generated in step S203 is transmitted to the hydraulic excavator 1, and the program in Fig. 6 is ended.

### (A flowchart illustrating the operation of the control controller 3)

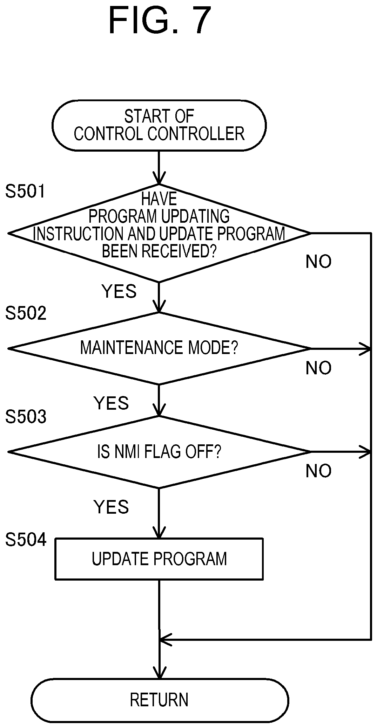

Fig. 7 is a flowchart illustrating the processing procedure of the program executed by the control controller 3. The CPU 3a of the control controller 3 mainly executes each step described below.

In step S501, the control controller 3 determines whether or not a program updating instruction and an update program have been received from the information controller 4. When the control controller 3 determines that it has received the program updating instruction and the update program, the control controller 3 determines, in step S502, whether or not the current operation mode is maintenance mode C3. When it is determined as YES, the process proceeds to step S503. In step S503, the control controller 3 determines whether or not the NMI flag is OFF. When it is determined as YES, the process proceeds to step S504, and a program of the ROM 3b is rewritten by using the update program.

When any one of steps S501 to S503 is determined as NO, the program in Fig. 7 is ended.

### (A flowchart illustrating the operation of the information controller 4)

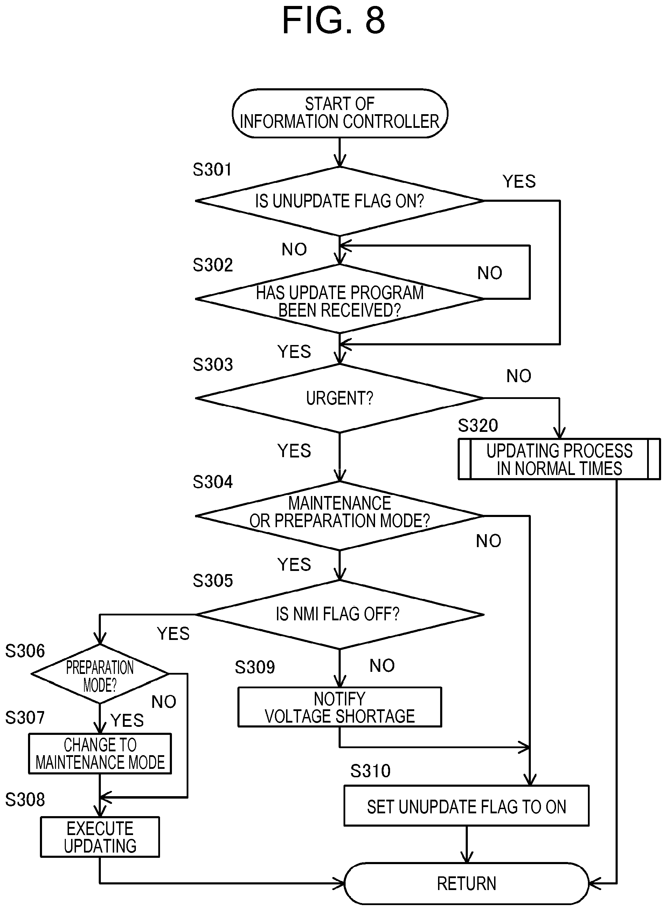

Fig. 8 is a flowchart illustrating the operation of the program that is executed by the maintenance processing section 46. When the information controller 4 is started, that is, when the operation mode is changed from stop mode C1 to preparation mode C2, this program is started to be executed. The CPU 4a of the information controller 4 mainly executes each step described below.

In step S301, it is determined whether or not the unupdate flag stored in the non-volatile memory 3e of the control controller 3 is ON. When it is determined that the unupdate flag is ON, the unupdate flag is rewritten to OFF so that the process proceeds to step S303. When it is determined that the unupdate flag is OFF, the process proceeds to step S302. As described above, the unupdate flag represents whether or not program rewriting by using a received update program has been completed. When program updating has not been completed, the unupdate flag is ON, and the process performed when the update program is received is started without receiving the update program from the server 81.

In step S302, it is determined whether or not the communication device 30 has received the notification of the update program from the server 81, that is, whether or not the communication device 30 has received update program information. When it is determined that the communication device 30 has not received the update program notification, the process remains in step S302. When it is determined that the communication device 30 has received the update program notification, the process proceeds to step S303.

In step S303, it is determined whether or not updating is urgent, that is, whether or not urgency degree information D2 included in the update program information is information representing urgency. When it is determined that updating is urgent, the process proceeds to step S304. When it is determined that updating is not urgent, the process proceeds to step S320. The process of step S320 will be described later with reference to Fig. 8.

In step S304, it is determined whether or not the operation mode of the hydraulic excavator 1 is maintenance mode C3 or preparation mode C2. The operation mode is set to the memory of the state management section 33 of the control controller 3, and the information controller 4 refers to the data in the memory to identify the operation mode. When it is determined that the operation mode is maintenance mode C3 or preparation mode C2, the process proceeds to step S305. When it is determined that the operation mode is not maintenance mode C3 or preparation mode C2, that is, that the operation mode is standby mode C4 or work mode C5, the process proceeds to step S310.

In step S305, it is determined whether or not the NMI flag recorded in the control controller 3 is OFF, that is, whether or not the voltage of the battery 60 is in the normal range. When it is determined that the voltage of the battery is equal to a threshold value or greater than the threshold value, the NMI flag is OFF. When it is determined that the voltage of the battery is less than the threshold value, the NMI flag is ON. When it is determined that the NMI flag is OFF (the voltage of the battery is equal to the threshold value or greater than the threshold value), the process proceeds to step S306. When it is determined that the NMI flag is ON (the voltage of the battery is less than the threshold value), the process proceeds to step S309.

In step S306, it is determined whether or not the operation mode is preparation mode C2. When it is determined that the operation mode is preparation mode C2, the process proceeds to step S307. When it is determined that the operation mode is not preparation mode C2, that is, when it is determined that the operation mode is maintenance mode C3, the process proceeds to step S308 since the operation mode is not required to be changed to maintenance mode C3.

In step S307, an instruction for changing the operation mode to maintenance mode C3 is outputted to the state management section 33 of the control controller 3, and the process proceeds to step S308.

In step S308, a program updating instruction and the update program are transmitted to the control controller 3 to end the program in Fig. 8.

In step S309, the lowering of the voltage of the battery is notified to the operator by using the monitor controller 27, and the process proceeds to step S310.

In step S310, the unupdate flag is set to ON, the received update program information is stored in the flash memory, and the program in Fig. 8 is ended.

### (The subroutine of step S320 in Fig. 8)

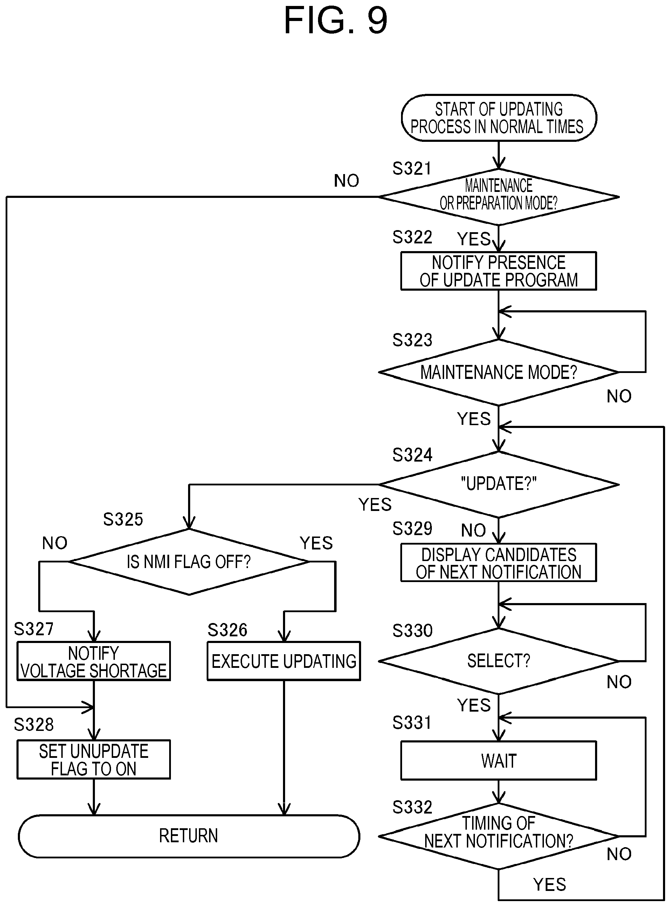

Fig. 9 is a flowchart illustrating a subroutine that is executed in step S320 in Fig. 8, that is, when urgency degree information D2 included in the received update program information is not information representing urgency.

In step S321, it is determined whether or not the operation mode of the hydraulic excavator 1 is maintenance mode C3 or preparation mode C2. When it is determined that the operation mode is maintenance mode C3 or preparation mode C2, the process proceeds to step S322. When it is determined that the operation mode is not maintenance mode C3 or preparation mode C2, that is, when it is determined that the operation mode is standby mode C4 or work mode C5, the process proceeds to step S328.

In step S322, program updating notification, for example, the character string "There is an update program. When preparation mode C2, switch to maintenance mode C3.", is displayed on the display device 28 by using the monitor controller 27, and the process proceeds to step S323.

In step S323, it is determined whether or not the operation mode of the hydraulic excavator 1 is maintenance mode C3. When it is determined that the operation mode of the hydraulic excavator 1 is maintenance mode C3, the process proceeds to step S324. When it is determined that the operation mode of the hydraulic excavator 1 is not maintenance mode C3, the process remains in step S323.

In step S324, a display for inquiring whether or not program updating is required, for example, the character string "Update/Not update", as illustrated in Fig. 5, is displayed on the display device 28 by using the monitor controller 27. Then, when it is determined that the operator has performed an input for updating, that is, an input for making updating affirmative, for example, an input for selecting "Update", the process proceeds to step S325. When it is determined that the operator has performed an input for denying updating, for example, an input for selecting "Not update", the process proceeds to step S329.

In step S325, it is determined whether or not the NMI flag is OFF, that is, whether or not the voltage of the battery 60 is in the normal range. When it is determined that the NMI flag is OFF, the process proceeds to step S326. When it is determined that the NMI flag is ON, the process proceeds to step S327.

In step S326, a program updating instruction and the update program are transmitted to the control controller 3 to execute the updating of a program of the ROM 3b of the control controller 3, and the subroutine in Fig. 9 is ended.

In step S327, the lowering of the voltage of the battery is notified to the operator by using the monitor controller 27, and the process proceeds to step S328.

In step S328, the unupdate flag is set to ON, the received update program information is stored in the non-volatile memory 3e, and the subroutine in Fig. 9 is ended.

When the selection that denies updating is performed in step S324, for example, in step S329 that is executed when "Not update" in Fig. 5 is selected, the candidates of the period in which the next notification is performed are displayed on the display device 28 by using the monitor controller 27. For example, "Select re-notification period: 10 minutes later/30 minutes later/one hour later/three hours later" is displayed on the display device 28 by using the monitor controller 27. Then, the process proceeds to step S330.

In step S330, it is determined whether or not the operator has selected any one of the candidates displayed on the display device 28 by using a button, not illustrated. When it is determined that the operator has selected any one of the candidates, the process proceeds to step S331. When it is determined that the operator has not selected any one of the candidates, the process remains in step S330.

After the waiting for a fixed time, for example, one second, in step S331, the process proceeds to step S332.

In step S332, it is determined whether or not the current time corresponds to the next notification period that has been selected in step S330. When it is determined that the current time corresponds to the next notification period, the process proceeds to step S324. When it is determined that the current time does not correspond to the next notification period, the process returns to step S331.

According to the first embodiment, the following operational effects can be obtained.
(1) The information controller 4 is the program rewriting device of the present invention mounted on the hydraulic excavator 1. The information controller 4 is provided with the maintenance processing section 46 that executes the process for rewriting a program of the control controller 3 that is the on-board controller.
   The maintenance processing section 46 is provided with the mode determination section 46a that determines whether the operation mode of the hydraulic excavator 1 is the maintenance mode in which the program can be rewritten and the operation of the hydraulic cylinder 56 and the hydraulic motor 57 is prevented, the preparation mode in which the rewriting of the program and the operation of the hydraulic cylinder 56 and the hydraulic motor 57 are prevented, or the work mode in which the rewriting of the program is prevented and the operation of the hydraulic cylinder 56 and the hydraulic motor 57 is permitted, the urgency degree determination section 46b that determines the degree of urgency for rewriting of a program, and the rewriting execution section 46c that outputs an instruction for rewriting the program of the ROM 3b of the control controller 3 by using the update program by changing the operation mode to the maintenance mode when the mode determination section 46a has determined that the operation mode is the preparation mode, the urgency degree determination section 46b has determined that the degree of urgency is high, and the voltage of the battery 60 is the predetermined value or more.
   Since the information controller 4 is configured in this manner, when the update program in which the degree of urgency is high is received in the preparation mode, the program of the control controller 3 can be updated without delay by changing the operation mode to the maintenance mode, so that program updating can be performed immediately.
(2) The hydraulic excavator 1 is provided with the maintenance mode setting switch 25 that sets the maintenance mode. When the mode determination section 46a has determined the preparation mode and the urgency degree determination section 46b has determined that the degree of urgency is low, when the maintenance mode is set by the maintenance mode setting switch 25 and it is determined that the user has inputted an intention indication for performing updating, the rewriting execution section 46c rewrites a program stored in the ROM 3b of the control controller 3.
   At receiving, in the preparation mode, the update program in which the degree of urgency is low, when the operator changes the preparation mode to the maintenance mode and inputs the intention indication of program updating, the program of the control controller 3 can be updated without delay, so that program updating can be performed immediately.
(3) The program rewriting device of the embodiment is configured to update a program by the information controller 4 that is a processor separated from the control controller 3. At the time of receiving an updating instruction from the maintenance processing section 46, the control controller 3 updates the program by using an update program after having determined that the operation mode is the maintenance mode.
   Thus, when the first embodiment in which the operation mode is managed on the control controller 3 side, even when the operation mode used when the information controller 4 determines whether or not updating is enabled and the operation mode managed on the control controller 3 side are not synchronous, program updating is executed only in the maintenance mode, which does not trouble the work of the hydraulic excavator.
(4) The maintenance processing section 46 is provided with the communication section that receives an update program and a signal indicating the degree of urgency for updating of the update program, that is, the interface 4d. The maintenance processing section 46 determines the degree of urgency based on the signal indicating urgency degree information D2 received by the communication section.
   Thus, the maintenance processing section 46 is not required to previously store the degree of urgency of the update program, and can determine the degree of urgency based on urgency degree information D2 received together with the update program.
(5) The hydraulic excavator 1 is provided with the state management section 33 that manages the operation mode. The maintenance processing section 46 determines the operation mode based on the output of the state management section 33.

Thus, the maintenance processing section 46 is not required to manage the operation mode of the hydraulic excavator 1, so that processing is easy.

### (Modification 1)

In the first embodiment that has been described above, the state management section 33 is provided in the control controller 3, but the state management section 33 that is provided in the control controller 3 may be provided in the information controller 4. In this case, the control controller 3 transmits an input from the input device 20 to the information controller 4.

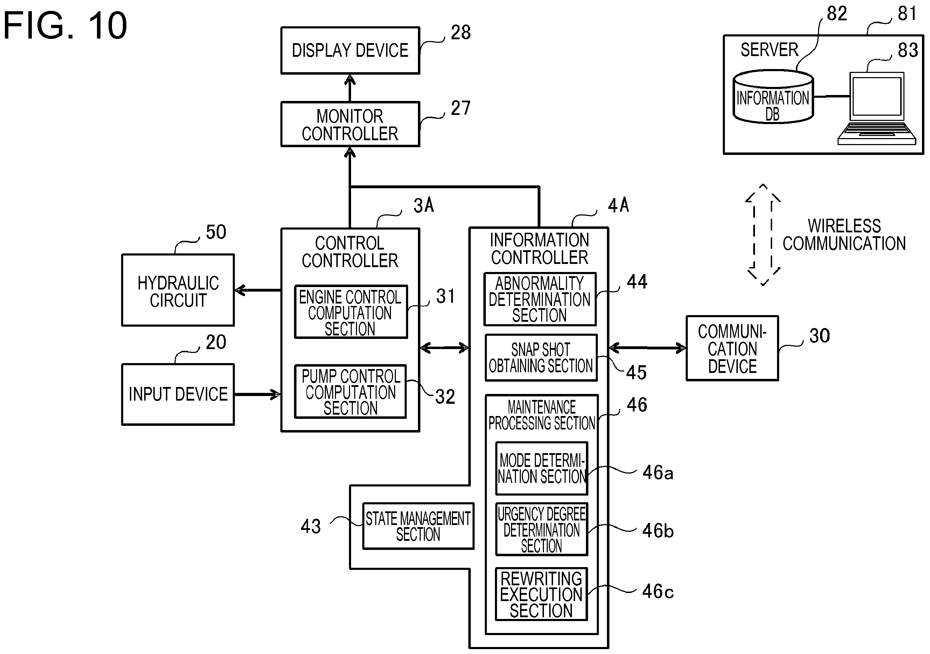

Fig. 10 is a functional block diagram of the control controller 3 and the information controller 4 according to modification 1. A control controller 3A is provided with the engine control computation section 31 and the pump control computation section 32. An information controller 4A is provided with a state management section 43, the abnormality determination section 44, the snap shot obtaining section 45, and the maintenance processing section 46. The operation of each functional block is the same as the first embodiment.

According to modification 1, the following operational effects can be obtained in addition to operational effects (1) to (4) of the first embodiment.
(1) The information controller 4A is provided with the state management section 43 that manages the operation mode of the construction machine. A rewriting control section, that is, the maintenance processing section 46, determines the operation mode based on the output of the state management section 43.

Thus, the maintenance processing section 46 can determine the operation mode of the hydraulic excavator 1 without communicating with the control controller 3, so that immediate processing is enabled.

### (Modification 2)

In the first embodiment that has been described above, the information controller 4 performs the same process as the case of receiving an update program from the server 81 when the unupdate flag is ON (step S301 in Fig. 8: YES → step S303). However, when the unupdate flag is ON, the same process as the case where the degree of urgency is high may be performed regardless of the degree of urgency of the update program stored in the non-volatile memory 3e. That is, when it is determined as YES in step S301 in Fig. 8, the process may proceed to step S304.

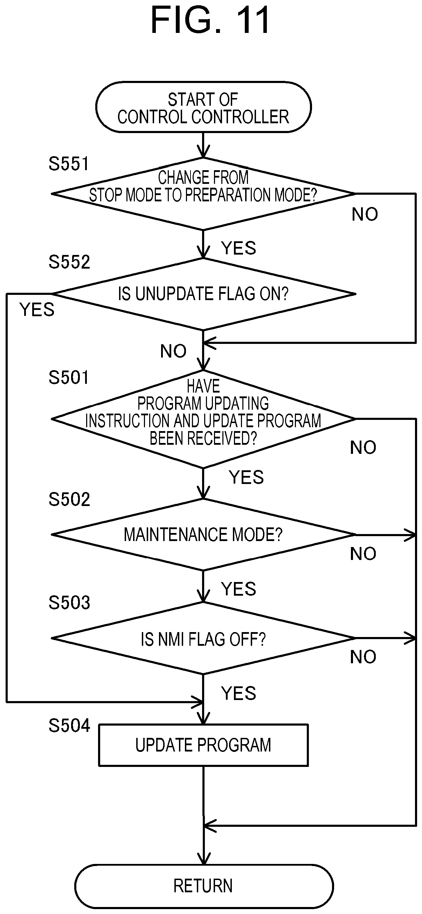

In addition, the information controller 4 may be unrequired to perform the process of the unupdate flag, and the control controller 3 may perform the process of the unupdate flag. For example, the control controller 3 determines that the operation mode has been switched from stop mode C1 to preparation mode C2 and further, when the unupdate flag is ON, a program of the ROM 3b of the control controller 3 may be rewritten by using an update program stored in the non-volatile memory 3e. In this case, the operation of the control controller 3 is represented in Fig. 11 as follows.

Fig. 11 is a flowchart illustrating the operation of the program executed by the control controller 3 according to modification 2. The same processes as Fig. 7 of the first embodiment are indicated by the same step numbers, and the description is omitted. The CPU 3a of the control controller 3 mainly executes each step that will be described below.

In step S551, it is determined whether or not the operation mode has been switched from the stop mode to the preparation mode, and it is determined as YES, the process proceeds to step S552. Step S552 in which whether or not the unupdate flag is ON is determined is determined as YES, the process proceeds to step S504, and a program of the ROM 3b is rewritten by using an update program.

When it is determined as NO in step S551 or step S552, the process proceeds to step S501, and the same processing as the first embodiment is performed.

According to modification 2, the following operational effects can be obtained in addition to operational effects (1) to (4) of the first embodiment.
(1) When an update program is received in the work mode, program updating is performed at the time of switching to the preparation mode next time regardless of the degree of urgency. That is, in such a program rewriting device, at the time of rewriting a program of the control controller 3 by using an update program, when the mode determination section 46a has determined the work mode, the rewriting execution section 46c does not perform program updating regardless of whether the degree of urgency is high or low, and at the time of switching to the preparation mode next time, rewrites the program of the control controller 3 by using the update program.

Even when the update program is delivered in the work mode, the program of the control controller 3 can be reliably updated by using the update program at the next start of the hydraulic excavator. This can prevent updating from being forgotten.

### (Other modifications)

The first embodiment that has been described above may be modified as follows.
(1) The NMI flag may be stored in the RAM 4c of the information controller 4. That is, the NMI flag is stored in the storage area that can be accessed by the maintenance processing section 46 of the information controller 4.
(2) A non-volatile memory may be provided in the information controller 4, and the unupdate flag may be stored in the non-volatile memory. That is, the unupdate flag is stored in the storage area that can be accessed by the maintenance processing section 46 of the information controller 4 and in which information is held even when the hydraulic excavator 1 performs changing to the stop mode.
(3) The maintenance processing section 46 may be unrequired to be provided with the function of outputting a program rewriting instruction of the control controller 3, and other devices may be provided with the function. That is, the hydraulic excavator may be provided with a controller having the program rewriting function, which is different from the control controller 3 and the information controller 4, or the function of outputting the program rewriting instruction may be implemented in the control controller 3.
(4) The maintenance processing section 46 may rewrite a program of an on-board controller other than the control controller 3. In this case, the identification information of a device whose program is to be rewritten is included in update program information received from the server 81, and based on the identifier, the maintenance processing section 46 designates the device whose program is to be rewritten, and rewrites the program by the above-described process.
(5) The target to which the present invention is applied is not limited to the hydraulic excavator. The present invention is applicable to a construction machine having at least the following three operation modes. That is, the three operation modes are the maintenance mode in which the rewriting of the program is permitted and further, the operation of the actuator is prevented, the preparation mode in which the rewriting of the program and the operation of the actuator are prevented, and the work mode in which the rewriting of the program is prevented, but the operation of the actuator is permitted.
(6) The information controller 4 may be provided with the function of the communication device 30, and the information controller 4 may communicate with the server 81.
(7) The maintenance processing section 46 may be unrequired to refer to the NMI flag, and the control controller 3 that has received a program rewriting instruction may refer to the NMI flag, and may determine whether or not rewriting is enabled.
(8) When information related to urgency degree information D2 included in update program information is transmitted between the devices configuring the hydraulic excavator 1, an identifier previously determined by a communication protocol may be used. For example, CANID of CAN or the port number of TCP or UDP may be used as an identifier, the correspondence of the identifier and the degree of urgency may be previously determined, and urgency degree information may be transmitted by using the CANID or the port number.
(9) At the time of receiving, in the preparation mode, an update program in which the degree of urgency is low, when the preparation mode is manually switched to the maintenance mode and an intention to perform updating is inputted, the maintenance processing section 46 performs program updating. However, at the time of receiving, in the preparation mode, the update program in which the degree of urgency is low, the maintenance processing section 46 may perform program updating only by the operation of manually switching the preparation mode to the maintenance mode. That is, the maintenance processing section 46 may perform program updating by assuming that the switching to the maintenance mode is an intention indication input. In such a modification, program updating is enabled immediately based on the determination of the user by using even the update program in which the degree of urgency is low.
(10) When the mode determination section 46a has determined that the operation mode is the preparation mode, the urgency degree determination section 46b has determined that the degree of urgency is high, and the voltage of the battery 60 is the predetermined value or more, the rewriting execution section 46c of the first embodiment outputs an instruction for rewriting a program of the ROM 3b of the control controller 3 by using an update program by changing the operation mode to the maintenance mode. However, when the mode determination section 46a has determined that the operation mode is the preparation mode and the urgency degree determination section 46b has determined that the degree of urgency is high, the rewriting execution section 46c may output the instruction for rewriting the program of the ROM 3b of the control controller 3 by using the update program by changing the operation mode to the maintenance mode. That is, the voltage state of the battery 60 may be unrequired to be taken into consideration.

### (Second embodiment)

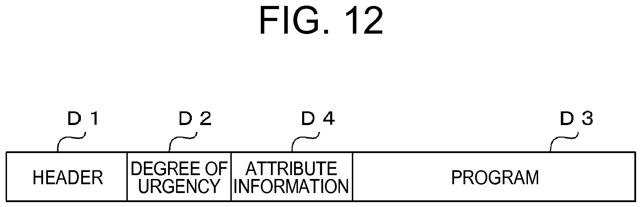

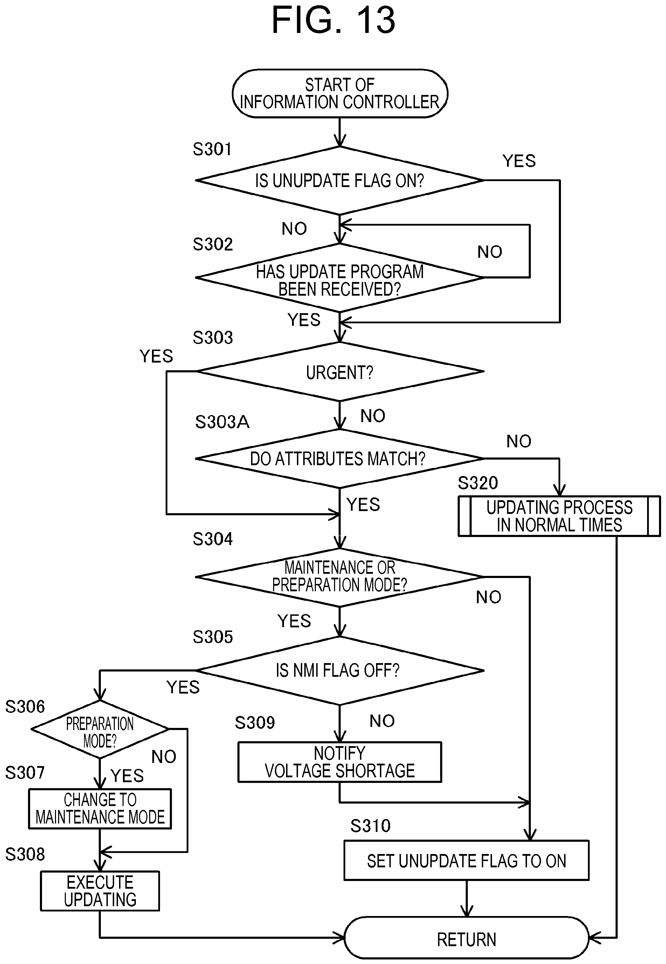

A second embodiment of the program rewriting device including the information controller that is the program rewriting device for the construction machine according to the present invention will be described with reference to Figs. 12 and 13. In the following description, the same components as the first embodiment are indicated by the same reference signs, and the differences will be mainly described. The points that are not particularly described are the same as the first embodiment. This embodiment is different from the first embodiment in that not only whether the degree of urgency is high or low, but also the difference between attributes, is evaluated.

The second embodiment is different from the first embodiment in the operation of a program stored in the ROM 4b of the information controller 4. That is, the operation of the maintenance processing section 46 is different from the first embodiment. In addition, attribution information is further stored in the ROM 3b of the control controller 3.

The attribute information is information that represents the attribute of the hydraulic excavator 1, and includes at least one of configuration attribute information and non-configuration attribute information. The configuration attribute information is attribute information based on the configuration of the hydraulic excavator 1, and is, for example, the length of a boom, the exhaust amount of the engine, a model number, and the like. The non-configuration attribute information is attribute information based on the non-configuration of the hydraulic excavator 1, and is, for example, the destination place and purchaser of the hydraulic excavator 1.

The second embodiment is also different from the first embodiment in information stored in the information database 82 and the structure of data transmitted from the server 81 to the hydraulic excavator 1.

### (The structure of data)

Fig. 12 is a diagram illustrating the structure of update program information according to the second embodiment. The update program information according to the second embodiment includes header D1, urgency degree information D2, update program D3, and attribute information D4. Header D1, urgency degree information D2, and update program D3 are the same as the first embodiment. Attribute information D4 is the same type of information as attribute information stored in the ROM 4b of the information controller 4. Attribute information D4 is stored in the information database 82 together with a program and urgency degree information.

For example, the manager of the server 81 determines attribute information stored in the information database 82 as follows. That is, based on the feature of a new update program, a particular attribute that is to be immediately rewritten to the update program is determined. For example, attribute information D4 is "destination place = X country" with respect to an update program that has eliminated a malfunction that may occur in a country having particular weather conditions, for example, only in the X country.

### (The operation of the maintenance processing section)

The maintenance processing section 46 performs the following process in addition to the process in the first embodiment. That is, when attribute information D4 included in received update program information matches attribute information stored in the ROM 4b, the process in the case where urgency degree information D2 is information representing urgency regardless of the value of urgency degree information D2 is performed. Thus, the maintenance processing section 46 functions as an attribute matching determination section.

### (A flowchart illustrating the operation of the information controller)

A program illustrated in the flowchart in Fig. 13 illustrates the processing procedure executed by the maintenance processing section 46 according to the second embodiment in place of the program illustrated in the flowchart in Fig. 8 according to the first embodiment. The same processes as Fig. 8 are indicated by the same step numbers, and the description is omitted.

When it is determined in step S303 that the degree of urgency is low, the process proceeds to step S303A. It is determined in step S303A whether or not attribute information D4 included in update program information and attribute information stored in the ROM 3b match. When it is determined that attribute information D4 included in the update program information and attribute information stored in the ROM 3b match, the process proceeds to step S304. When it is determined that attribute information D4 included in the update program information and the attribute information stored in the ROM 3b do not match, the process proceeds to step S320.

That is, even when urgency degree information D2 is not information representing urgency, when attributes match, the same process as the case where urgency degree information D2 is information representing urgency is performed. For example, when "destination place = X country" is included in the attribute of the program, as described above, and "destination place = X country" is also included in the attribute of the construction machine, and the operation mode is maintenance mode C3 or preparation mode C2, and the NMI flag is OFF, program updating is performed.

According to the second embodiment that has been described above, the following operational effects can be obtained.
(1) The hydraulic excavator 1 is provided with the storage section in which the attribute of the hydraulic excavator 1 is stored, that is, the ROM 3b. The information controller 4 is provided with the reception section that receives an update program and a signal indicating the attribute of the update program, that is, the interface 4d. The maintenance processing section 46 executes the same process as the case where it is determined that the degree of urgency is high when the attribute of the hydraulic excavator 1 stored in the ROM 3b and the attribute of an update program, that is, attribute information D4, match.

Thus, by using even a program in which urgency degree information D2 is low, which has been described in the first embodiment, it is possible to immediately perform program updating in the device having a particular attribute based on attribute information D4.

### (Modifications of the second embodiment)

The second embodiment may be modified as follows.
(1) An attribute is stored in the ROM 3b of the control controller 3, but may be stored in the ROM 4b of the information controller 4.
(2) An attribute is previously stored in the ROM 3b, but may be rewriteable from a remote place, and may be automatically rewritable by using sensed information. For example, a country or a region in which the hydraulic excavator 1 is being operated may be designated by using a satellite positioning system, and may be stored in the ROM 3b with this as an attribute.
(3) A plurality of attributes may be included in attribute information D4 and the attribute stored in the ROM 3b may be included in the attributes of attribute information D4, so that it may be determined that the attributes match. For example, when the attributes of attribute information D4 are "destination place = X country, Y country, Z country", when the attribute stored in the ROM 3b is "destination place = X country", it may be determined that the attributes match.
(4) A plurality of types of attributes may be stored in the ROM 3b, and a plurality of types of attributes may be stored in attribute information D4. In that case, when any one of the attributes stored in the ROM 3b and any one of the attributes stored in attribute information D4 match, it may be determined that the attributes match, or when all types of attributes stored in the ROM 3b and all types of attributes stored in attribute information D4 match, it may be determined that the attributes match. For example, when the attributes of attribute information D4 are "destination place = X country, boom length: 5.5 m or more" and the attributes stored in the ROM 3b are "destination place = Z country, boom length: 7 m", this satisfies the condition of the attribute of the boom length, so that it may be determined that the attributes match. Alternatively, since the destination place attributes are different, it may be determined that the attributes do not match.

Each of the embodiments and modifications that have been described above may be combined with each other.

Various embodiments and modifications have been described above, but the present invention is not limited to the contents of these. Other forms that can be considered within the range of the technical idea of the present invention are also included within the range of the present invention.

### REFERENCE SIGNS LIST

- 1 ...: Hydraulic excavator (construction machine)
- 3 ...: Control controller (on-board controller)
- 3e ...: Non-volatile memory (storage section)
- 4 ...: Information controller (program rewriting device)
- 4d ...: Interface (communication section)
- 33, 43 ...: State management section
- 46 ...: Maintenance processing section (rewriting control section)
- C2 ...: Preparation mode
- C3 ...: Maintenance mode
- C5 ...: Work mode
- 100 ...: Program rewriting system

## Claims

1. A program rewriting device (4) for a construction machine (1) that rewrites a program of an on-board controller (3) mounted in the construction machine (1), **characterized in that** the program rewriting device (4) comprises:
- a mode determination section (46a) that determines whether the operation mode of the construction machine (1) is a maintenance mode in which the program can be rewritten and the operation of an actuator is prevented, a preparation mode in which the rewriting of the program and the operation of the actuator are prevented, or a work mode in which the rewriting of the program is prevented and the operation of the actuator is permitted;
- an urgency degree determination section (46b) that determines the degree of urgency for rewriting of an update program of the on-board controller (3); and
- a rewriting execution section that, at the time of rewriting the program of the on-board controller (3) by using the update program, when the mode determination section (46a) has determined that the operation mode is the preparation mode and the urgency degree determination section (46b) has determined that the degree of urgency is high, rewrites the program of the on-board controller (3) by using the update program by switching the operation mode to the maintenance mode.

2. The program rewriting device (4) according to claim 1, further comprising:
the program rewriting device (4) includes a setting operation section that sets the maintenance mode;
wherein at the time of rewriting the program of the on-board controller (3) by using the update program, when the mode determination section (46a) has determined the preparation mode and the urgency degree determination section (46b) has determined that the degree of urgency is low, the rewriting execution section rewrites the program of the on-board controller (3) by using the update program when the preparation mode is switched to the maintenance mode by the setting operation section.

3. The program rewriting device (4) according to claim 1,
wherein at the time of rewriting the program of the on-board controller (3) by using the update program, when the mode determination section (46a) has determined the work mode, the rewriting execution section does not perform program updating regardless of whether the degree of urgency is high or low, and at the time of switching to the preparation mode next time, rewrites the program of the on-board controller (3) by using the update program.

4. The program rewriting device (4) according to claim 1,
wherein the program is updated by a processor that is separated from the on-board controller (3),
wherein at the time of receiving an updating instruction from the rewriting execution section, the on-board controller (3) updates the program by using the update program after having determined that the operation mode is the maintenance mode.

5. The program rewriting device (4) according to claim 1, further comprising:
- a reception section that receives the update program and an attribute signal that indicates the attribute of the update program; and
- an attribute matching determination section that determines whether or not the attribute of the construction machine (1) and the attribute of the update program match;
wherein when the mode determination section (46a) has determined that the operation mode is the preparation mode and the attribute matching determination section has determined that the attributes match, the rewriting execution section rewrites the program of the on-board controller (3) by using the update program by switching the operation mode to the maintenance mode.

## Patentansprüche

1. Programmneuschreibvorrichtung (4) für eine Baumaschine (1), wobei die Programmneuschreibvorrichtung ein Programm einer in der Baumaschine (1) angebrachten fahrzeugeigenen Steuereinheit (3) neu schreibt, **dadurch gekennzeichnet, dass** die Programmneuschreibvorrichtung (4) umfasst:
- einen Betriebsartbestimmungsabschnitt (46a), der bestimmt, ob die Betriebsart der Baumaschine (1) eine Wartungsbetriebsart, in der das Programm neu geschrieben werden kann und der Betrieb eines Aktuators verhindert wird, eine Vorbereitungsbetriebsart, in der das Neuschreiben des Programms und der Betrieb des Aktuators verhindert werden, oder eine Arbeitsbetriebsart, in der das Neuschreiben des Programms verhindert wird und der Betrieb des Aktuators zugelassen ist, ist;
- einen Dringlichkeitsgrad-Bestimmüngsabschnitt (46b), der den Dringlichkeitsgrad zum Neuschreiben eines Aktualisierungsprogramms der fahrzeugeigenen Steuereinheit (3) bestimmt; und
- einen Neuschreibausführungsabschnitt, der zum Zeitpunkt des Neuschreibens des Programms der fahrzeugeigenen Steuereinheit (3) unter Verwendung des Aktualisierungsprogramms das Programm der fahrzeugeigenen Steuereinheit (3) unter Verwendung des Aktualisierungsprogramms durch Schalten der Betriebsart in die Wartungsbetriebsart neu schreibt, wenn der Betriebsartbestimmungsabschnitt (46a) bestimmt hat, dass die Betriebsart die Vorbereitungsbetriebsart ist, und der Dringlichkeitsgrad-Bestimmungsabschnitt (46b) bestimmt hat, dass der Dringlichkeitsgrad hoch ist.

2. Programmneuschreibvorrichtung (4) nach Anspruch 1, die ferner umfasst:
dass die Programmneuschreibvorrichtung (4) einen Betriebseinstellabschnitt enthält, der die Wartungsbetriebsart einstellt;
wobei zum Zeitpunkt des Neuschreibens des Programms der fahrzeugeigenen Steuereinheit (3) unter Verwendung des Aktualisierungsprogramms der Neuschreibausführungsabschnitt das Programm der fahrzeugeigenen Steuereinheit (3) unter Verwendung des Aktualisierungsprogramms neu schreibt, wenn die Vorbereitungsbetriebsart durch den Betriebseinstellabschnitt in die Wartungsbetriebsart geschaltet wird, wenn der Betriebsartbestimmungsabschnitt (46a) die Vorbereitungsbetriebsart bestimmt hat und der Dringlichkeitsgrad-Bestimmungsabschnitt (46b) bestimmt hat, dass der Dringlichkeitsgrad niedrig ist.

3. Programmneuschreibvorrichtung (4) nach Anspruch 1,
wobei zum Zeitpunkt des Neuschreibens des Programms der fahrzeugeigenen Steuereinheit (3) unter Verwendung des Aktualisierungsprogramms der Neuschreibausführungsabschnitt die Programmaktualisierung unabhängig davon, ob der Dringlichkeitsgrad hoch oder niedrig ist, nicht ausführt und das Programm der fahrzeugeigenen Steuereinheit (3) unter Verwendung des Aktualisierungsprogramms zu dem Zeitpunkt neu schreibt, zu dem das nächste Mal in die Vorbereitungsbetriebsart geschaltet wird, wenn der Betriebsartbestimmungsabschnitt (46a) die Arbeitsbetriebsart bestimmt hat.

4. Programmneuschreibvorrichtung (4) nach Anspruch 1,
wobei das Programm durch einen Prozessor aktualisiert wird, der von der fahrzeugeigenen Steuereinheit (3) getrennt ist,
wobei die fahrzeugeigene Steuereinheit (3) zu dem Zeitpunkt des Empfangs einer Aktualisierungsanweisung von dem Neuschreibausführungsabschnitt das Programm unter Verwendung des Aktualisierungsprogramms aktualisiert, nachdem sie bestimmt hat, dass die Betriebsart die Wartungsbetriebsart ist.

5. Programmneuschreibvorrichtung (4) nach Anspruch 1, die ferner umfasst:
- einen Empfangsabschnitt, der das Aktualisierungsprogramm und ein Attributsignal, das das Attribut des Aktualisierungsprogramms angibt, empfängt; und
- einen Attributübereinstimmungs-Bestimmungsabschnitt, der bestimmt, ob das Attribut der Baumaschine (1) und das Attribut des Aktualisierungsprogramms übereinstimmen;
wobei der Neuschreibausführungsabschnitt das Programm der fahrzeugeigenen Steuereinheit (3) unter Verwendung des Aktualisierungsprogramms durch Schalten der Betriebsart in die Wartungsbetriebsart neu schreibt, wenn der Betriebsartbestimmungsabschnitt (46a) bestimmt hat, dass die Betriebsart die Vorbereitungsbetriebsart ist, und der Attributübereinstimmungs-Bestimmungsabschnitt bestimmt hat, dass die Attribute übereinstimmen.

## Revendications

1. Dispositif de réécriture de programme (4) pour une machine de chantier (1) qui réécrit un programme d'un contrôleur embarqué (3) monté dans la machine de chantier (1), **caractérisé en ce que** le dispositif de réécriture de programme (4) comprend :
- une section de détermination de mode (46a) qui détermine si le mode de fonctionnement de la machine de chantier (1) est un mode de maintenance dans lequel le programme peut être réécrit et le fonctionnement d'un actionneur est empêché, un mode de préparation dans lequel la réécriture de programme et le fonctionnement de l'actionneur sont empêchés, ou un mode de travail dans lequel la réécriture du programme est empêchée et le fonctionnement de l'actionneur est permis ;
- une section de détermination de degré d'urgence (46b) qui détermine le degré d'urgence pour réécrire un programme de mise à jour du contrôleur embarqué (3) ; et
- une section d'exécution de réécriture qui, au moment de la réécriture du programme du contrôleur embarqué (3) en utilisant le programme de mise à jour, quand la section de détermination de mode (46a) a déterminé que le mode de fonctionnement est le mode de préparation et que la section de détermination de degré d'urgence (46b) a déterminé que le degré d'urgence est élevé, réécrit le programme du contrôleur embarqué (3) en utilisant le programme de mise à jour par commutation du mode de fonctionnement vers le mode de maintenance.

2. Dispositif de réécriture de programme (4) selon la revendication 1, comprenant en outre :
le dispositif de réécriture de programme (4) inclut une section de fonctionnement de fixation qui fixe le mode de maintenance ;
dans lequel, au moment de la réécriture de programme du contrôleur embarqué (3) en utilisant le programme de mise à jour, quand la section de détermination de mode (46a) a déterminé le mode de préparation et quand la section de détermination de degré d'urgence (46b) a déterminé que le degré d'urgence est faible, la section d'exécution de réécriture réécrit le programme du contrôleur embarqué (3) en utilisant le programme de mise à jour quand le mode de préparation est commuté vers le mode de maintenance par la section de fonctionnement de fixation.

3. Dispositif de réécriture de programme (4) selon la revendication 1,
dans lequel, au moment de la réécriture du programme du contrôleur embarqué (3) en utilisant le programme de mise à jour, quand la section de détermination de mode (46a) a déterminé le mode de travail, la section d'exécution de réécriture n'effectue pas la mise à jour du programme indépendamment de savoir si le degré d'urgence est élevé ou faible et, au moment de la commutation vers le mode de préparation la fois suivante, elle réécrit le programme du contrôleur embarqué (3) en utilisant le programme de mise à jour.

4. Dispositif de réécriture de programme (4) selon la revendication 1,
dans lequel le programme est mis à jour par un processeur qui est séparé du contrôleur embarqué (3),
dans lequel, au moment de la réception d'une instruction de mise à jour provenant de la section d'exécution de réécriture, le contrôleur embarqué (3) met à jour le programme en utilisant le programme de mise à jour après avoir déterminé que le mode de fonctionnement est le mode de maintenance.

5. Dispositif de réécriture de programme (4) selon la revendication 1, comprenant en outre :
- une section de réception qui reçoit le programme de mise à jour et un signal attribut qui indique l'attribut du programme de mise à jour ; et
- une section de détermination d'accord d'attribut qui détermine si l'attribut de la machine de chantier (1) et l'attribut du programme de mise à jour sont accordés ;
dans lequel, quand la section de détermination de mode (46a) a déterminé que le mode de fonctionnement est le mode de préparation et quand la section de détermination d'accord d'attribut a déterminé que les attributs sont accordés, la section d'exécution de réécriture réécrit le programme du contrôleur embarqué (3) en utilisant le programme de mise à jour en commutant le mode de fonctionnement vers le mode de maintenance.
